# EUROPEAN PATENT SPECIFICATION

(11) **EP 1 992 152 B1**
(45) Date of publication and mention of the grant of the patent: **27.01.2010**
(21) Application number: 06808833.5
(22) Date of filing: 08.09.2006
(51) Int. Cl.: H04M 1/725, H04M 1/2745

(54) **METHOD AND SYSTEM FOR ORGANIZING INCIDENT RECORDS IN A MOBILE RADIO TEMINAL**
VERFAHREN UND SYSTEM ZUM ORGANISIEREN VON INZIDENTEN AUFZEICHNUNGEN IN EINEM MOBILFUNKENDGERÄT
PROCÉDÉ ET SYSTÈME POUR ORGANISER DES ENREGISTREMENTS D'INCIDENTS DANS UN TERMINAL RADIO MOBILE

(30) Priority: 08.03.2006 US 370476
(43) Date of publication of application: 19.11.2008
(73) Proprietor: Sony Ericsson Mobile Communications AB, 221 88 Lund (SE)
(72) Inventor: SJOLANDER, David, S-254 50 Helsingborg (SE); HANSSON, Bjorn, S-214 21 Malmo (SE)
(74) Representative: Banzer, Hans-Jörg
(86) International application number: PCT/IB2006/002477
(87) International publication number: WO 2007/102048

(56) References cited:
- EP-A2- 0 637 807
- WO-A-2004/057892

## Description

### TECHNICAL FIELD OF THE INVENTION

The present invention relates generally to electronic equipment, such as electronic equipment for engaging in voice communications. More particularly, the invention relates to a method and system for organizing incident records in such electronic equipment.

### DESCRIPTION OF THE RELATED ART

Mobile items of electronic equipment that provide for voice communication are becoming increasingly popular. In addition, the features associated with the electronic equipment have become increasingly diverse. To name a few examples, many electronic equipment include cameras, text messaging capability, Internet browsing functionality, electronic mail capability, video playback capability, audio playback capability, image display capability, hands-free headset interfaces and location tracking capability (e.g., by receiving global positioning satellite (GPS) data).

The electronic equipment can include a memory used to store data, address book or contact information, ring tones, video clips, audio clips, image files and so forth. These items and any other types of items stored by the memory are typically arranged in files and will be referred to herein as content. The occurrence of certain incidents, such as an incoming or outgoing call, an incoming or outgoing text message and so forth, may be stored in a log. The record of each incident in the log may have an associated time and date stamp indicating when the incident occurred.

Other incidents also may be associated with a time stamp. For instance, photographs taken with a camera of the electronic equipment may be associated with the time and date that the photograph was taken. It may be possible to arrange the photographs or other incidents in order of occurrence to create a temporal based organization (e.g., timeline organization) of the incidents. The incidents may be searched to find incidents occurring at a certain time or may be displayed in chronological order.

While temporal based organization and searching may be a convenient manner to interact with certain incidents, there are limits to the ability of the user to find certain incidents and/or related information using the time and date of the incident.

Reference in this context is made to prior art documents WO 2004/057892 and EP-A-0 637 807.

### SUMMARY

The invention is as set out in the independent claims 1 and 10, preferred forms being set out in the dependent claims 2 to 9.

According to one aspect of the invention, a method of managing incident records in a mobile radio terminal includes, upon the occurrence of an incident involving the mobile radio terminal, generating an incident record associated with the incident, wherein the incident record contains mnemonically based location information that is indicative of a location of the mobile radio terminal at the time of the incident. The method further includes searching the location information associated with plural incident records using search criteria that includes at least one location related mnemonic value; and arranging incident records satisfying the search criteria in a logical manner for presentation to a user.

According to another aspect, the search criteria further includes a time value or time range.

According to another aspect, the method further includes conducting a second search of the location information associated with plural incident records to identify incident records having at least one of a time based, content based or incident type based relationship to a selected one of the incident records identified in the search using search criteria that included the at least one mnemonic value.

According to one aspect of the invention, a method of managing incident records in a mobile radio terminal, includes upon the occurrence of an incident involving the mobile radio terminal, generating an incident record associated with the incident; and associating location information with the incident record, the location information being indicative of a location of the mobile radio terminal at the time of the incident

According to another aspect, the location information is in the form of a mnemonic for the location of the mobile radio terminal at the time of the incident.

According to another aspect, the method associates the time of the incident with the incident record.

According to another aspect, the method associates an accuracy of the location information with the incident record.

According to another aspect, the method searches the location information associated with plural incident records to return a first set of incident records satisfying a set of search criteria.

According to another aspect, the method searches for incident records having at least one of a time based, content based or incident type based relationship to a selected one of the incident records from the first set of incident records to return a second set of incident records.

According to another aspect, the method groups the incident records of the first set by logically arranged groups.

According to another aspect, the method plots the incident records of the first set against a map.

According to another aspect, the method orders the incident records of the first set by at least one of a chronological order or a geographical order.

According to another aspect of the invention, a mobile radio terminal includes a memory for storing an incident record for each occurrence of an incident involving the mobile radio terminal; and a processor for executing logic to associate location information with each incident record, the location information being indicative of a location of the mobile radio terminal at the time of the incident.

According to another aspect, the processor further executes logic to search the location information associated with plural incident records to return a first set of incident records satisfying a set of search criteria.

According to another aspect, the processor further executes logic to search for incident records having at least one of a time based, content based or incident type based relationship to a selected one of the incident records from the first set of incident records to return a second set of incident records.

According to another aspect, the processor further executes logic to group the incident records of the first set by logically arranged groups.

According to another aspect, the processor further executes logic to plot the incident records of the first set against a map.

According to another aspect, the processor further executes logic to order the incident records of the first set by at least one of a chronological order or a geographical order.

According to another aspect of the invention, a program stored on a machine usable medium, the program including an incident record organization function that is executable by a mobile radio terminal, the program including executable logic to upon the occurrence of an incident involving the mobile radio terminal, generate an incident record associated with the incident; and associate location information with the incident record, the location information being indicative of a location of the mobile radio terminal at the time of the incident.

According to another aspect, the program includes executable logic to search the location information associated with plural incident records to return a first set of incident records satisfying a set of search criteria.

According to another aspect, the program includes executable logic to search for incident records having at least one of a time based, content based or incident type based relationship to a selected one of the incident records from the first set of incident records to return a second set of incident records.

According to another aspect, the program includes executable logic to group the incident records of the first set by logically arranged groups.

According to another aspect, the program includes executable logic to plot the incident records of the first set against a map.

According to another aspect, the program includes executable logic to order the incident records of the first set by at least one of a chronological order or a geographical order.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the claims appended hereto.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

FIG. 1 is a schematic view of a mobile telephone as an exemplary electronic equipment in accordance with an embodiment of the present invention;
FIG. 2 is a schematic block diagram of the relevant portions of the mobile telephone of FIG. 1 in accordance with an embodiment of the present invention;
FIG. 3 is a flow chart of an exemplary incident record organization scheme carried out by the mobile telephone of FIG. 1 in accordance with an embodiment of the present invention; and
FIG. 4 is a flow chart of an exemplary incident record retrieval scheme carried out by the mobile telephone of FIG. 1 in accordance with an embodiment of the present invention.

### DETAILED DESCRIPTION OF EMBODIMENTS

The present invention will now be described with reference to the drawings, wherein like reference numerals are used to refer to like elements throughout.

The term "electronic equipment" includes portable radio communication equipment. The term "portable radio communication equipment," which herein after is referred to as a "mobile radio terminal," includes all equipment such as mobile telephones, pagers, communicators, i.e., electronic organizers, personal digital assistants (PDAs), smartphones, portable communication apparatus or the like.

In the present application, the invention is described primarily in the context of a mobile telephone. However, it will be appreciated that the invention is not intended to be limited to a mobile telephone and may be any type of electronic equipment. For instance, aspects of the invention may be applied to portable items of electronic equipment that do not include radio communications functionality, such as a PDA or a multimedia player.

As used herein, the term incident refers to the occurrence of an event associated with the electronic equipment. Accordingly, the term incident is broadly defined to include the occurrence of user based action and/or electronic equipment based action. Accordingly, incidents may include one or more of the following examples, which, as will be appreciated, may not be a complete list of all the possible incidents that may be organized in the manners described herein. Incidents may include incoming and/or outgoing calls, including voice only calls and/or video calls. Incidents may include incoming and/or outgoing messages, such as electronic mail messages, a text or multimedia message (e.g., a short message service (SMS) format transmission or a multimedia messaging service (MMS) format transmission), or the like. Incidents may include drafted messages, such as an electronic mail message, SMS or MMS that has been fully or partially composed but not yet transmitted. Incidents may include instant messaging (IM) communications and/or chats. Incidents may include file transfers and/or acquisitions, including the act of downloading a file, receiving a file by push delivery, transmitting a file, uploading a file, sharing a file, and so forth. A file transfer may include the purchasing of the file. Files may be any appropriate file format and include, for example, word processing documents, spreadsheets, audio files (e.g., ring tones, WAV files, MP3 files, etc.), video files, image files (e.g., JPEG files), and so forth. Incidents may include use of an Internet browser to access the Internet or specific "web" pages. Incidents may include accessing a server, establishing a virtual private network (VPS) session, logging into or registering with a server, interacting with a remotely executed software application, and so forth. Incidents may include posting or reading a blog entry.

Other types of incidents may include taking of a photograph, writing of a note, or entry or access of stored information (e.g., contact information stored in an address book, "buddy list", etc.). Incidents may include the entry of a calendar or personal organizer event, or the reminder or occurrence of a stored calendar or personal organizer event. Incidents may include accessing of content stored by a memory of the electronic equipment 10, such as use of a file, listening to an audio file, watching of a video file, etc. Incidents may include use of a mobile television, video, radio or music service. Incidents may include connectivity events, such as the exchange of a file, image or data over a local interface (e.g., infrared interface, Bluetooth interface, wired connection, etc.) with another mobile electronic equipment or fixed location device (e.g., desktop computer). Other connectivity events may include the presence of a local interface, such as wireless interfaces (e.g., an infrared interface or a Bluetooth interface), a wired connection (e.g., USB or Firewire connection), connection of a "hands-free" earset or headset (e.g., over wired or wireless interface), connection of an accessory, connection of a battery charger and so forth.

An incident record, as used herein, is a record of the associated incident. The record may take any suitable format, such a log entry, the corresponding file, etc. The number of incident records may be limited to a predetermined number of incident records (e.g., the last 500 or last 1,000 incidents) to conserve memory space. Records for certain type of incidents may be grouped and stored, either together with the records of other types of incidents or separate from other types of incidents. For example, records of incoming and outgoing calls may be stored in a call list(s). Similarly, records of incoming and outing messages may be stored in the same call list or in a separate messaging list(s). In the example of calls, no content related to an associated conversation may be stored (if, in fact, the call was taken and a conversation occurred). However, in other examples, the record may be associated with content. For example, in the case of a photograph, the record may be a log of photographs taken and/or stored. Alternatively, the record associated with a photograph may be the corresponding image file itself. As will be appreciated, the incident records may be stored in any suitable database structure and/or may be stored across multiple databases, files or logs of the same type or different types.

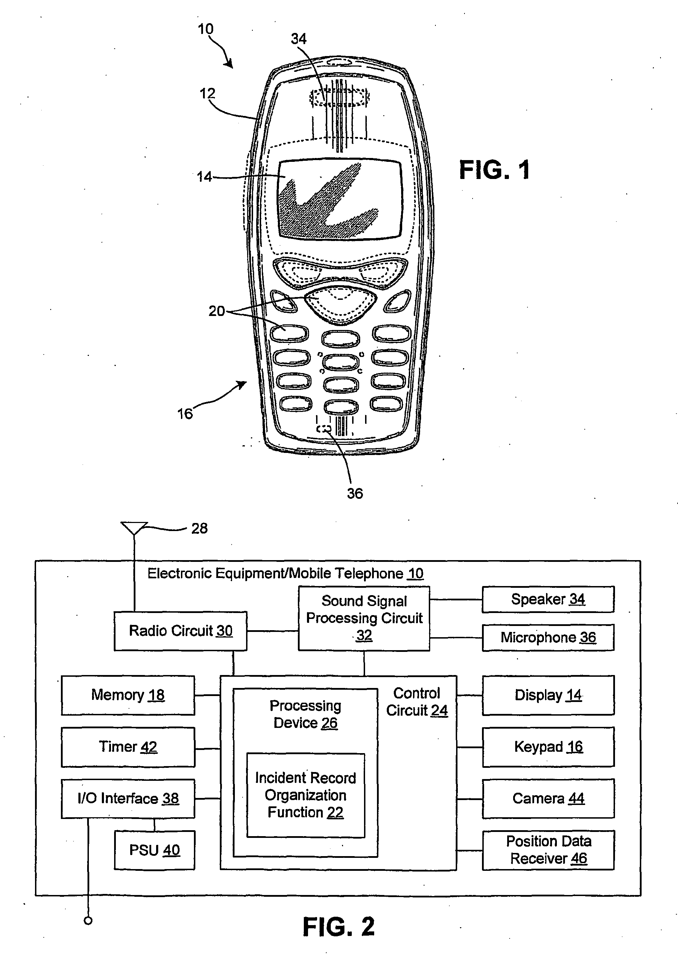

Referring initially to FIG. 1, an electronic equipment 10 is shown in accordance with the present invention. The electronic equipment includes an incident record organization function that is configured to organize incident records by location information associated with the incident records. It will be appreciated that the incident record organization function may be embodied as executable code that may be resident in the electronic equipment 10.

The illustrated electronic equipment 10 is a portable device. Due to the basic nature of portable devices, the electronic equipment 10 is operable when taken from location to location by a user. Hence, there is not only a relationship between each incident and when the incident took place, but there also is a relationship between each incident and where the incident took place. One or both of these relationships will be used by the incident record organization function to organize incident records and assist the user in retrieving one or more particular incident records of interest, as will be explained in greater detail below.

The electronic equipment in the exemplary embodiment is a mobile telephone and will be referred to as the mobile telephone 10. The mobile telephone 10 is shown as having a "brick," "block" or "stick" form factor type housing 12, but it will be appreciated that other type housings, such as a clamshell housing or a slide-type housing, may be utilized without departing from the scope of the invention.

The mobile telephone 10 includes a display 14 and keypad 16. As is conventional, the display 14 displays information to a user such as operating state, time, telephone numbers, contact information, various navigational menus, etc., which enable the user to utilize the various feature of the mobile telephone 10. The display 14 may also be used to visually display content received by the mobile telephone 10 and/or retrieved from a memory 18 (FIG. 2) of the mobile telephone 10.

Similarly, the keypad 16 may be conventional in that it provides for a variety of user input operations. For example, the keypad 16 typically includes alphanumeric keys 20 for allowing entry of alphanumeric information such as telephone numbers, phone lists, contact information, notes, etc. In addition, the keypad 16 typically includes special function keys such as a "call send" key for initiating or answering a call, and a "call end" key for ending, or "hanging up" a call. Special function keys may also include menu navigation keys, for example, for navigating through a menu displayed on the display 14 to select different telephone functions, profiles, settings, etc., as is conventional. Other keys associated with the mobile telephone may include a volume key, audio mute key, an on/off power key, a web browser launch key, a camera key, etc. Keys or key-like functionality may also be embodied as a touch screen associated with the display 14.

The mobile telephone 10 includes conventional call circuitry that enables the mobile telephone 10 to establish a call and/or exchange signals with a called/calling device, typically another mobile telephone or landline telephone. However, the called/calling device need not be another telephone, but may be some other device such as an Internet web server, content providing server, etc.

FIG. 2 represents a functional block diagram of the mobile telephone 10. With the exception of an incident organization function 22 according to the present invention, which is preferably implemented as executable logic in the form of application software or code within the mobile telephone 10, the construction of the mobile telephone 10 is otherwise generally conventional. The mobile telephone 10 includes a primary control circuit 24 that is configured to carry out overall control of the functions and operations of the mobile telephone 10. The control circuit 24 may include a processing device 26, such as a CPU, microcontroller or microprocessor. The processing device 26 executes code stored in a memory (not shown) within the control circuit 24 and/or in a separate memory, such as memory 18, in order to carry out conventional operation of the mobile telephone 10. The memory 18 may be, for example, a buffer, a flash memory, a hard drive, a removable media, a volatile memory and/or a non-volatile memory. In addition, the processing device 26 executes code in accordance with the present invention in order to perform the incident record organization function 22.

It will be apparent to a person having ordinary skill in the art of computer programming, and specifically in applications programming for mobile telephones, how to program a mobile telephone 10 to operate arid carry out the functions described herein. Accordingly, details as to the specific programming code have been left out for sake of brevity. Also, while the incident record organization function 22 is executed by the processing device 26 in accordance with the preferred embodiment of the invention, such functionality could also be carried out via dedicated hardware, firmware, software, or combinations thereof, without departing from the scope of the invention.

Continuing to refer to FIGs. 1 and 2, the mobile telephone 10 includes an antenna 28 coupled to a radio circuit 30. The radio circuit 30 includes a radio frequency transmitter and receiver for transmitting and receiving signals via the antenna 28 as is conventional. The mobile telephone 10 further includes a sound signal processing circuit 32 for processing the audio signal transmitted by/received from the radio circuit 28. Coupled to the sound processing circuit 32 are a speaker 34 and a microphone 36 that enable a user to listen and speak via the mobile telephone 10 as is conventional. The radio circuit 30 and sound processing circuit 32 are each coupled to the control circuit 24 so as to carry out overall operation.

The mobile telephone 10 also includes the aforementioned display 14 and keypad 16 coupled to the control circuit 24. The mobile telephone 10 further includes an I/O interface 38. The I/O interface 38 may be in the form of typical mobile telephone I/O interfaces, such as a multi-element connector at the base of the mobile telephone 10. As is typical, the I/O interface 38 may be used to couple the mobile telephone 10 to a battery charger to charge a power supply unit (PSU) 40 within the mobile telephone 10. In addition, or in the alternative, the I/O interface 38 may serve to connect the mobile telephone 10 to a wired personal hands-free adaptor (not shown) or a local wireless interface (e.g., the I/O interface may include or be connected to local wireless adapter such as a Bluetooth adaptor for use with a Bluetooth-based hands-free adaptor or other device). Further, the I/O interface 38 may serve to connect the mobile telephone 10 to a personal computer or other device via a data cable or wireless link, etc.

The mobile telephone 10 may also include a timer 42 for carrying out timing functions. Such functions may include timing the durations of calls, generating the content of time and date stamps, etc.

The mobile telephone 10 may be configured to operate in a communications system (not illustrated). The system can include a server or servers for managing calls placed by and destined to the mobile telephone 10, transmitting content to the mobile telephone 10 and carrying out any other support functions. The server communicates with the mobile telephone 10 via a network and a transmission medium The transmission medium may be any appropriate device or assembly, including, for example, a communications tower, another mobile telephone, a wireless access point, a satellite, etc. Portions of the network may include wireless transmission pathways.

The mobile telephone 10 may include a camera 44 for taking digital pictures. Image files corresponding to the pictures may be stored in the memory 18.

The mobile telephone 10 also may include a position data receiver 46, such as a global positioning satellite (GPS) receiver, Galileo satellite system receiver or the like.

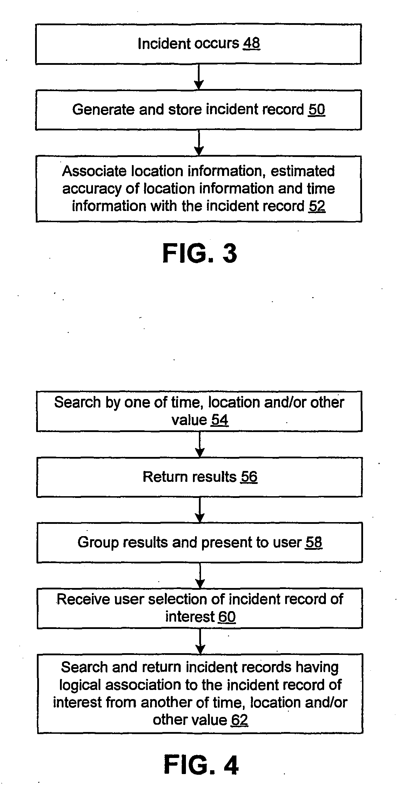

Referring to FIG. 3, a method of incident record organization carried out by the mobile telephone 10 is depicted. The method may be embodied as executable code, such as in the form of the incident record organization function 22.

The illustrated method starts in block 48 by the occurrence of an incident. The incident may be the occurrence of any of the example incidents described above, or may be any other location and/or time trackable event, user action, incoming or outgoing transmission or the like.

Following occurrence of the incident in block 48, the process may proceed to block 50 in which an incident record is generated and stored, such as in the memory 18. The incident record may take any suitable form as described above, including, without limitation, a log entry, storing content or data related to the incident, etc.

In block 52, which may be conducted concurrently with block 50 or separately from block 50, temporal information and location information is associated with the incident record. For example, a time and date stamp may be appended to the incident record so that the time at which the incident occurred is known. In addition, a location stamp may be appended to the incident record so that a location of the incident is known. Various formats for the location stamp will be discussed below.

To generate the location stamp, the mobile telephone 10 includes a mechanism to determine a location associated with each incident. In a preferred embodiment, the location stamp is automatically generated based on information available to the incident record organization function 22 from other operable components of the mobile telephone 10. For instance, the location determination mechanism may include accessing an identity of a communications access point (e.g., communications tower) servicing the mobile telephone 10 at the time of the incident For instance, the communications tower may be part of a cellular network (e.g., a "cell" tower) that has an associated identifier (e.g., "cell ID") and the identifier is communicated to the mobile telephone 10. Each identifier or cell ID in a particular servicing network may be assumed to be unique and, therefore, may be used to indicate relative proximity to a certain location. In one embodiment, the cell ID and any related radio parameters may be used to generate a coordinate value through a radio network service. For example, under global system mobile communications (GSM) and universal mobile telecommunications system (UMTS) protocols, the position could be estimated through a mobile originated location request (MO-LR) to the network so that the mobile telephone 10 position could be estimated using the network's knowledge of tower locations and antenna directions.

In other embodiments, location information may be determined by receipt of location data from a dedicated system, such as a global positioning satellite (GPS), Galileo satellite system or the like. Such data may be received via the position receiver 46, if present as part of the mobile telephone 10. For instance, GPS coordinates may be expressed using a standard reference system (e.g., the world geodetic system or WGS).

In other embodiments, location information may be derived from user entered data. For example, after taking a photograph, the user may enter the location at which the photograph was taken. As will become more apparent below, user entered location information or other location data may be translated to a mapping or coordinate system used by the used incident record organization function 22 for searching incident records and/or for arranging incident records relative to other incident records so as to generate logical groups of incident records based on related location information.

In still other embodiments, the location information need not be related to the relative position of the mobile telephone 10 at the time of the incident, but may the location of some other object or landmark. For instance, the user may enter location information for a particular incident that is meaningful to the user, but which does not have a direct association with the location of the mobile telephone 10 at the time that the incident occurred (e.g., if a work related message is received while the user is on vacation, the user may specify the location as the user's office). As another example, if the incident is a call involving a stationary phone, the location information may be related to the location of a stationary telephone. In another example, the location information may be a potentially dynamic location, such as a location of another mobile telephone. Location data for another mobile telephone may be retrieved by using a "friend find" feature as implemented with an "I Seek You" (ICQ) feature or a location field maintained by a subscriber identity module (SIM) card or vCard of the other mobile telephone.

Multiple location stamps may be associated with an incident record. For example, both servicing tower identifier and GPS data may be stored, if both are available. As another example, where the incident is a call or message, the location of the mobile telephone 10 may be stored as well as the location of the called/calling/messaged/messaging device.

The data contained in the location stamp associated with the incident record may follow a hierarchy so that if a preferred type of information is not available, a substitute type of information may be stored. For example, GPS data may be the preferred type of information. If the mobile telephone 10 is not equipped with a GPS receiver or if the mobile telephone 10 has a GPS receiver but GPS data is temporarily unavailable, the servicing tower identifier may be stored.

In other situations, if the source of location information is not available (e.g., loss of one or more of GPS data, connection with a servicing tower, etc.) at the time of an incident, the location stamp may reflect location information offset in time from occurrence of the incident. For example, if an incident occurs and current location information is not available, a last recorded or known position may be used for the location stamp even though the mobile telephone 10 may have moved in the interim. Alternatively, if an incident occurs and current location information is not available, the location stamp may be populated with location information when the source of information becomes available at some future point in time even though the mobile telephone 10 may have moved in the interim. This location information may be tagged with an indication that it may be inaccurate or not particularly useful for some purposes.

In addition to associating a time/date stamp with each incident record and a location stamp with each incident record, the accuracy of the location information contained in the location stamp may be associated with the incident record in the form of an accuracy stamp. For example, if the location information is GPS data, the information may be highly accurate. In this case, the accuracy stamp may be in the form of a GPS accuracy estimate provided with the GPS information data. If the location information is a servicing tower identifier, the location information may be accurate to a servicing range of the servicing tower.

The accuracy stamp may take the form of relative value, such as a value selected from a scale of accuracy (e.g., "highly accurate," "somewhat accurate," "low accuracy" and "not reliable"). Alternatively, the accuracy stamp may take the form of a quantifiable value, such as a distance expressed in kilometers, tenths of kilometers, miles or tenths of miles. The accuracy stamp may be expressed as a two-dimensional or three-dimensional uncertainty shape, such as an ellipse or ellipsoid. For example, GPS-based positions are often described by an ellipsoid to reflect a margin of error.

As indicated, the location stamp format may take one or more formats. The format for each type of underlying incident need not be same. The location data, for example, may be expressed in terms of a coordinate system, map-related positions, city municipality name, raw or processed GPS data, raw or processed servicing tower identifier or user specified value, a mnemonic value, etc. In one embodiment, user specified values (also referred to as "favorite locations") may be used with higher priority than other types of location data due to the meaning that that the user associations with these types of mnemonics. Example user specified mnemonic values include "work," "school," "home," "Bob's house." "Mary's office," "city park," a restaurant's or cafe's name, a frequented location's name, and so forth.

Mnemonic values for the location stamp may be selected from a predetermined database of well-known landmarks, places and/or commercial locations (e.g., as derived from yellow page listings), from a user provided list of places and/or from contact entries stored in an address book or contact list of the mobile telephone 10. The mnemonic value having an associated location closest in distance to the mobile telephone 10 at the time of the incident may be selected as the location stamp value by itself or in addition to other data such as coordinate values. For example, when using servicing tower identifier as the source of location information, the location stamp data may be generalized by the incident record organization function 22 as the area serviced by the associated cell tower or as a mnemonic associated with a landmark or place located within that service area (e.g., a particular building, street, intersection, monument, user specified value, etc.), postal address (e.g., zip code), etc. Example user specified mnemonic values include "work," "school," "home," "Bob's house." "Mary's office," "city park," a restaurant's or cafe's name, a frequented location's name, and so forth.

No matter the format, the location data for an incident record is placed in a database structure that may be searched so as to return incident records satisfying the search criteria and so that an incident record of interest may be grouped and displayed/presented with other incident records having some logical relationship based on proximity. To this end, the incident record organization function 22 may include a translation function to translate machine/computer usable location stamp data values into expressions of locations having more meaning to a person and vice versa. Searching and grouping of incident records will be described in greater detail below.

With additional reference to FIG. 4, a method of searching, retrieving and presenting incident records carried out by the mobile telephone 10 is depicted. The method may be embodied as executable code, such as in the form of the incident record organization function 22. The illustrated method generally depicts an exemplary method of using the location informations previously associated with the incident records.

As will become apparent, the method allows for searching by location or other criteria. Results may be grouped in a logical arrangement. From the search results, related incidents may be identified. These features are helpful to a user when attempting to find certain information, but cannot remember when a particular incident occurred or may be more interested as to where an incident occurred. For example, a user may be interested in retrieving pictures of the user's vacation house, regardless of when those pictures were taken. In another situation, the user may recall that he or she received a call at a certain location, but cannot remember the exact time. The user may be interesting in sending a message to the person who called, but his or her information was not stored in a contacts database or address book. To find the contact information related to the prior incoming call, the user may search for incident records having a location stamp associated with at the remembered location to readily identify the incident in question.

It will be understood that the uses of the searching and grouping techniques describe herein and ways of implementing the searching and grouping are extensive. Certain exemplary models for these functions of the incident record organization function 22 are describe herein, but other models are intended to fall within the scope of the claims appended hereto.

The method of FIG. 4 may begin in block 54 where a search of the incidents records is conducted. The search may be made based on one or more criteria and/or to cover one or more types of incident records. For all searching techniques described herein, options to filter in or filter out incident records by time, location, incident type and/or content may be made available. For example, a search may be made of only photographs or a search may be made for all incident types except connectivity events (e.g., the presence of a local interface or connected accessory) and downloads.

One example search may be a time based search of incoming calls. The results of such a search may be displayed as a chronological listing of the calls satisfying the search criteria so as to map the incoming calls over a timeline. Another search may be based on content. For example, a search may be made for all ring tones containing music by a certain artist.

Focusing now on searching by use of the location stamp information and/or the location stamp accuracy information, a location search of incident records may be made to generate a geographical set of search results. These search results will be broadly referred to herein as a "geoline" and searching using location information will be broadly referred to herein as "geoline searching." As will be appreciated, the user may switch between timeline searching and geoline searching, and may use search results from one search as the starting point of a next search.

A number of basic geoline searching techniques are possible. Geoline searching may be limited to one or more types of incident records or configured to retrieve all incident records meeting the geographical search criteria. Geoline searching may be further based on the accuracy of the data within the location stamp and/or the specificity of location search criteria. For example, if the accuracy of the location information is fairly inaccurate as indicated by either the location stamp value or the location stamp accuracy data (e.g., servicing tower identifier is typically less accurate than GPS data), the search engine could filter in more incident records when the location search criteria is fairly narrow. Such filtering will tend to capture more incidents than may have actually occurred at the search criteria location. That is, incidents that may have occurred at or near the search criteria location as suggested by the accuracy of the location data may be included in the search results. Therefore, while such over-inclusion may create some false-positive search results, the likelihood of omitting an incident for which the user is seeking is reduced. Similarly, if the accuracy of the location information is fairly accurate, the search engine could filter in less incident records when the location search criteria are fairly narrow.

Also, the search engine could be configured to filter in more incident records when the location search criteria is fairly broad (e.g., the location search criteria relates to a whole city or regional zip code) and less incident records when the location search criteria is fairly narrow (e.g., the location search criteria relates to a particular place, such as the user's home, or a set of given coordinates).

As will be appreciated, a translation of the search criteria into the format(s) used by the location stamp may be made (or vice versa) so that relevant incident records may be identified. For instance, if the search criteria include a mnemonic and the location stamp stores GPS data, the mnemonic may be translated to GPS coordinates for searching to be carried out. As another example, if the search criteria include a location relative to a map and the location stamp stores a servicing tower identifier, the specified location may be translated to a corresponding servicing tower identifier as an indication of location.

In one example, the mobile telephone 10 may be made to display a map. Preferably, map is associated with navigation tools to pan in common directions (e.g., north, east, south, west and combinations thereof), zoom in and zoom out. The user may specify a place of interest on the map. The incident record organization function 22 uses the specified location to identify all incident records have a relationship to the specified location and any other search criteria. For example, if the user were interested in retrieving incidents that occurred during a trip to a certain city, the user may select the city from the map. The geoline searching may become more narrow by zooming in to select a specific part of the city and such narrowing of the search criteria may be limited only by the resolution of the map and/or the relative accuracy of the data within the location stamps.

Another search technique is to have the user specify a location by name. The name may relate to the mnemonics described above, including, without limitation, user specified location values stored as the location stamp data (which may also be referred to a the user's personal favorite locations), well-known landmarks and places (train stations, buildings, intersections, restaurants, sporting venues, retail stores, business and so forth). In another example, the name may relate to an address or mnemonic associated with a person or business stored in the user's contact list or address book. In another example, the search may be made on a full or partial postal address, coordinate values, servicing tower identifier and so forth.

In another example, the search may be made on the current location of the mobile telephone 10 to find incidents occurring within a specified geographical range from the current location. As another example, a search may be made on a former location of the mobile telephone 10. In this case the mobile telephone 10 may be configured to store a certain number of past locations and the user may select a past location of interest by scrolling through a chronological listing or geographical listing of those locations. A geographical listing may be a list of locations ordered in relative distance to the current location of the mobile telephone 10 or from some other specified location. Plural former locations also may be searched to create a geographical trace of incidents related to the mobile telephone 10. Similarly, a search may be made on the current or former location of another person's mobile telephone.

With continued reference to FIG. 4, in block 56 the search of block 54 returns a set of results. The results may include each incident record satisfying the search criteria.

Thereafter, in block 58, the search results of block 56 are grouped in a logical arrangement and presented to the user. Grouping and presenting search results obtained by using search criteria other than location sensitive search criteria will not be discussed in detail in favor of more detailed descriptions of example techniques for grouping and presenting search results obtained by using location sensitive search criteria. The search results may be grouped in terms of relevance to one another. The search results may be grouped as ordering of incident records by time, location, incident type and/or content relationship to one or more of the search criteria.

In one example, if the search was conducted based on current location of the mobile telephone 10 or some other location related search criteria, the results may be grouped in a geoline listing incident records starting from the current position of the mobile telephone 10 followed by incident records of by increasing distance away from that location. Alternatively, if the search was carried out for a specific location (e.g., a contact's location, user specified value, mnemonic, etc.) the results may be grouped in a geoline listing incident records starting from the specified location followed by incident records of by increasing distance away from that location.

The search results may be grouped in terms of relevance to one another. For instance, incidents occurring within a certain threshold distance from each other may be indicated as being grouped with each other. In one embodiment, a first group may include incidents at the search criteria location, another group may include incidents under a mile away and another group may include incidents over a mile away. In another embodiment, the groups may relate to locations, such as a group for incidents clustered near the search criteria location and other groups for incidents clustered near other identifiable locations in proximity to the search criteria location. To elaborate, the incidents may be grouped using reference points meaningful to the user, such as "incidents close to home," "incidents close to Bob's house," "incidents close to Grand Central Station, NY," and so forth. The expressions of locations may be points added to a map (either by user action or by operation of the incident record organization function), places identified by a user as a collection of personal landmarks, a relationship to the current location of the mobile telephone 10, a relationship to the address or present location of contacts stored in an address book, and so forth.

The grouped search results may be presented in a list through which the user may scroll. Alternatively, the results may be presented graphically, such as overlaid onto a map. Another graphical presentation technique may include a "mind-map" where groups of incidents are displayed as a connected graph of locations, such as under headings and/or using connecting lines to draw logical connections among groups of incidents or single incidents. Groups graphically displayed under a heading may be expanded to show individual incidents belonging to the selected group.

In another embodiment, incidents may be organized in a hierarchical manner. Using Manhattan as an example, a lowest level of groups may include locations in a region of Manhattan, such as lower Manhattan. As specific examples, such locations could be, e.g., Wall Street, Statute of Liberty, City Hall, select subway stops, select businesses, contacts stored by the mobile telephone 10, etc. Continuing the example, in a next tier, the groups may include lower Manhattan, Midtown, Central Park, Harlem, etc. A next higher level may be New York City's boroughs. A next higher level maybe the counties of New York state and/or regions of adjacent states, including New Jersey and Connecticut.

Using a hierarchical arrangement, the user may look for incidents in one tier and then "zoom in" or "zoom out" to browse through other incidents or find other incidents. For example, the user may search for incidents in a relatively low tier group (e.g., Lower Manhattan), move up a tier (e.g., Manhattan), move down a tier (e.g., Midtown) and move down another tier (e.g., Empire State Building or Penn Station). The user may also move "laterally" from one group to an adjacent group in the same hierarchical tier.

Another grouping technique may involve using postal information, such as zip or postal codes, street addresses, etc. Postal information differs widely from country to country. For example, five digit zip codes may be used in the United States to identify a specified area or a servicing Post Office branch. A four digit extension to the zip code may offer more precise information. In Sweden, for example, the digits of a five digital postal code are used to indicate progressively narrower geographical areas. The postal information may be used simply to group incidents by matches to postal information or to create a hierarchical structure.

Another grouping technique may involve sub-ordering incident records. For example, if the search returns incident records for a specified location, the returned incident records may be grouped in chronological fashion (e.g., within the last hour, within the last day, within the last week, etc.), grouped by incident type (e.g., calls, messages, downloads, etc.).

With continued reference to FIG. 4, in block 60 the user may select a particular incident record of interest from the search results. If the incident record or data associated with the incident record contains information that the user was interested in, the method may diverge from the illustrated method. For example, the user may use the incident record to retrieve desired information (e.g., a contact's address or phone number), call or send a message to a destination associated with the incident record, view a photograph or image file, play back a ring tone or audio file, and so forth.

One feature of the method is to be able to find incidents related to an incident identified or selected in block 60. Accordingly, the method may proceed from block 60 to block 62. In block 62, a supplemental search may be carried out to return incident records related to the selected incident record of block 60. The search of block 62 may be carried out using different or overlapping criteria as used for the search of block 54.

Finding an incident record of interest by one set of search criteria by carrying out blocks 54 to 60 and then searching for related incidents in block 62 provides a powerful tool (e.g., search engine interface) for the user. One may refer to this type of searching as "data mining."

As one specific example, a user might recall that he or she was at particular location when he or she sent an SMS and then, shortly after departing the location, received a call. Now the user wishes to find contact information related to the received call, but cannot remember when that call was received. To find the incident record of the call, the user may search by the location of the sent SMS to find the incident record of the SMS. Then, the user may conduct a search of incidents occurring within a certain period of time before and/or after the sending of the SMS, and/or by broader or different location criteria. The second set of search results should return the incident record of the call in question and any other incident records satisfying the search criteria of the search of block 64.

The search of block 62 may take one of a number of forms. In one embodiment, the search may be an expansion of the block 56 search results starting from the selected incident record of block 60 and proceeding further in distance, time, incident type and/or content than was specified by the initial search of block 54. In another embodiment, the search of block 62 simply may be a reordering of incident records by time, location, incident type and/or content relationship to the selected incident record. In another embodiment, the search of block 62 may include the use of new or modified search criteria. Alternatively, the search may incorporate features of more than one of these techniques and/or other techniques.

After the search and return of results in block 62, the method may return to block 58 where the results of block 62 are grouped and presented to the user as described in greater detail above.

As will be appreciated, there are a wide number of uses and data mining techniques for the incident record organization function and related methods described herein. There are also a wide number of modifications that may be made. These uses, data mining techniques and modifications are intended to fall within the scope of the claims appended hereto.

One such modification is to merge time and position relevance during searching. For example, in one embodiment, the user may specify a search by both a time (or range of time) and a location (or set of locations). In another embodiment, a weighting scheme may be used to examine both time stamp and location stamp records during the search. For some searches it may be appropriate to weight time more heavily than location to return more recent incidents (or incidents from a select period of time) while giving some consideration to location. This type of weighting arrangement would be appropriate in situations where the user is interested in incidents from a relatively narrow time period and from a relatively large geographic area (e.g., an incident from yesterday and occurring in the user's city of work). For other searches it may be appropriate to weight location more heavily than time to return incidents related to a particular location while giving some consideration to time (e.g., an incident at a specific spot, but from two weeks ago to two months ago).

The weighting values may be assigned statically to strive for a balance between time and location. Alternatively, the user may be given a choice to weight time or location more heavily for a given search. In another embodiment, a dynamic weighting adaptation scheme may be used. In this embodiment, the incident record organization function may track activity of the user after the presentation of initial search results (block 58). If the user tends to be interested in more recent incidents, the weighting may be shifted toward time based searching. If the user tends to be interested in incidents from very specific locations, the weighting may be shifted toward location based searching. In one embodiment, search results could be reordered dynamically by changing the weighting between location and time, such as by the user sliding a sliding bar on a graphical user interface from more location based emphasis to more time based emphasis, or vice versa. Such an embodiment would reorder the results to potentially bring a different set of incidents to the attention of the user for various weight value combinations.

In some situations, the mobile telephone 10 may exchange information with a server to assist in associating location information with incident records, searching by location information and/or grouping returned incident records by relative location. For instance, if the user desires to search by using the name of a landmark, the mobile telephone 10 may retrieve GPS coordinates for the landmark from a server for use in comparing search criteria against stored location data.

As will be appreciated, disclosed are systems and methods for associating location information with a record of an incident involving a portable electronic equipment. Also disclosed are systems and methods for searching, grouping and/or presenting incident records based on location information. These systems and methods have advantage to users who would like to mine the contents and/or logs of the electronic equipment to identify one or more incidents based at least in part on where the electronic equipment was when the incident took place (or where some other items of electronic equipment was when the incident took place).

The functionality relating to the management of location information for incidents of a portable electronic equipment may be embodied as the incident record organization function 22. Such functionality and any corresponding functions of a remote device or server may be embodied in any suitable form, including software, firmware, dedicated circuit components, computer readable media, machine usable medium and so forth.

Although the illustrations appended hereto that show a specific order of executing functional logic blocks, the order of execution of the blocks may be changed relative to the order shown. Also, two or more blocks shown in succession may be executed concurrently or with partial concurrence. Certain blocks also may be omitted. In addition, any number of commands, state variables, semaphores, or messages may be added to the logical flow for purposes of enhanced utility, accounting, performance, measurement, troubleshooting, and the like. It is understood that all such variations are within the scope of the present invention.

Although the invention has been shown and described with respect to certain preferred embodiments, it is understood that equivalents and modifications will occur to others skilled in the art upon the reading and understanding of the specification. The present invention includes all such equivalents and modifications, and is limited only by the scope of the following claims.

## Claims

1. A method of managing incident records in a mobile radio terminal (10), comprising the steps of:
upon the occurrence of each of plural incidents involving the mobile radio terminal (10), generating an incident record associated with the incident, wherein the incident record contains mnemonically based location information that is indicative of a location of the mobile radio terminal (10) at the time of the incident;
searching the location information associated with each incident record using search criteria that includes a location related mnemonic value;
arranging incident records that satisfy the search criteria for presentation to a user in a geoline format such that the arrangement includes a listing of incident records starting from the location associated with the location related mnemonic value of the search criteria followed by incident records of increasing distance away from the starting location; and
displaying the incident records in the geoline format.

2. The method of claim 1, wherein the search criteria further includes a time value or time range.

3. The method of any of claims 1-2, further comprising the step of conducting a second search of the location information associated with each incident-record, the second search searching for incident records having at least one of a time based, content based or incident type based relationship to a selected one of the incident records identified in the search using search criteria that included the location related mnemonic value.

4. The method of any of claims 1-3, wherein the incident records of increasing distance are grouped by one of threshold distance or relationship to identifiable locations.

5. The method of any of claims 1-4, wherein displaying the incident records includes graphically presenting the incident records on a map.

6. The method of any of claims 1-5, wherein each incident record further contains an estimate of an accuracy of the associated mnemonically based location information.

7. The method of claim 6, wherein searching the location information associated with each incident record includes filtering the incident records based on the estimate of the accuracy of the associated location information.

8. The method of any of claims 6-7, wherein displaying the incident records includes displaying accuracy information for each incident record based on the associated accuracy estimate.

9. The method of any of claims 1-8, wherein the incident records in the geoline format are browsable by hierarchical tiers of incident records.

10. A mobile radio terminal (10), comprising:
a memory (18) for storing an incident record upon the occurrence of each of plural incidents involving the mobile radio terminal (10);
a processor (26) for executing logic that when executed:
upon the occurrence of each incident, associates location information with the corresponding incident record, the location information being indicative of a location of the mobile radio terminal (10) at the time of the incident;
searches the location information associated with each incident record based on user entered search criteria that includes a location related mnemonic value; and
arranges incident records that satisfy the search criteria for presentation to a user in a geoline format such that the arrangement includes a listing of incident records starting from the location associated with the location related mnemonic value of the search criteria followed by incident records of increasing distance away from the starting location; and
a display (14) for displaying the incident records in the geoline format.

## Patentansprüche

1. Verfahren zum Verwalten von Ereignisaufzeichnungen in einem Mobilfunkendgerät (10), umfassend die Schritte:
aufgrund des Auftretens von jedem von mehreren Ereignissen, welche das Mobilfunkendgerät (10) betreffen, Erzeugen einer Ereignisaufzeichnung, welche dem Ereignis zugeordnet ist, wobei die Ereignisaufzeichnung eine mnemonisch basierte Ortsinformation enthält, welche einen Ort des Mobilfunkendgeräts (10) zu dem Zeitpunkt des Ereignisses anzeigt,
Suchen der Ortsinformation, welche jeder Ereignisaufzeichnung zugeordnet ist, unter Verwendung von Suchkriterien, welche einen ortsbezogenen mnemonischen Wert einbeziehen;
Anordnen der Ereignisaufzeichnungen, welche die Suchkriterien erfüllen, für eine Darstellung für einen Benutzer in einem geographisch geordneten Format derart, dass die Anordnung eine Auflistung von Ereignisaufzeichnungen beginnend von dem Ort aufweist, welcher dem Ort zugeordnet ist, welcher mit dem mnemonischen Wert der Suchkriterien in Beziehung steht, gefolgt von Ereignisaufzeichnungen einer steigenden Entfernung weg von dem beginnenden Ort; und
Anzeigen der Ereignisaufzeichnungen in dem geographisch geordneten Format.

2. Verfahren nach Anspruch 1, wobei die Suchkriterien ferner einen Zeitwert oder einen Zeitbereich aufweisen.

3. Verfahren nach einem der Ansprüche 1-2, ferner umfassend den Schritt eines Durchführens einer zweiten Suche der Ortsinformationen bezogen auf jede Ereignisaufzeichnung, wobei die zweite Suche nach Ereignisaufzeichnungen sucht, welche eine zeitbasierte, eine inhaltsbasierte und/oder eine ereignisartbasierte Beziehung zu einer ausgewählten der Ereignisaufzeichnungen aufweisen, welche bei der Suche unter Verwendung von Suchkriterien, welche den ortsbezogenen mnemonischen Wert aufweisen, identifiziert wurden.

4. Verfahren nach einem der Ansprüche 1-3, wobei die Ereignisaufzeichnungen in steigender Entfernung mit einer Schwellenwertentfernung oder einer Beziehung zu identifizierbaren Orten gruppiert werden.

5. Verfahren nach einem der Ansprüche 1-4, wobei das Anzeigen der Ereignisaufzeichnungen ein graphisches Darstellen der Ereignisaufzeichnungen auf einer Landkarte aufweist.

6. Verfahren nach einem der Ansprüche 1-5, wobei jede Ereignisaufzeichnung ferner eine Schätzung einer Genauigkeit der zugeordneten mnemonisch basierten Ortsinformation enthält.

7. Verfahren nach Anspruch 6, wobei das Suchen der Ortsinformation, welche jeder Ereignisaufzeichnung zugeordnet ist, ein Filtern der Ereignisaufzeichnungen auf der Grundlage der Schätzung der Genauigkeit der zugeordneten Ortsinformation aufweist.

8. Verfahren nach einem der Ansprüche 6-7, wobei das Anzeigen der Ereignisaufzeichnungen ein Anzeigen einer Genauigkeitsinformation für jede Ereignisaufzeichnung auf der Grundlage der zugeordneten Genauigkeitsschätzung aufweist.

9. Verfahren nach einem der Ansprüche 1-8, wobei die Ereignisaufzeichnungen in dem geographisch geordneten Format mit hierarchischen Schichten von Ereignisaufzeichnungen durchsuchbar sind.

10. Mobilfunkendgerät (10) umfassend:
einen Speicher (18) zum Speichern einer Ereignisaufzeichnung aufgrund des Auftretens eines jeden von mehreren Ereignissen, welche das Mobilfunkendgerät (10) einbeziehen;
einen Prozessor (26) zum Ausführen einer Logik, welche, wenn sie ausgeführt wird:
aufgrund des Auftretens eines jeden Ereignisses der entsprechenden Ereignisaufzeichnung eine Ortsinformation zuordnet, wobei die Ortsinformation einen Ort des Mobilfunkendgeräts (10) zu dem Zeitpunkt des Ereignisses anzeigt;
die Ortsinformation, welche jeder Ereignisaufzeichnung zugeordnet ist, auf der Grundlage von benutzereingegebenen Suchkriterien, welche einen ortsbezogenen mnemonischen Wert aufweisen, sucht; und
die Ereignisaufzeichnungen, welche die Suchkriterien erfüllen, für eine Darstellung für einen Benutzer in einem geographisch geordneten Format derart anordnet, dass die Anordnung eine Auflistung von Ereignisaufzeichnungen beginnend von dem Ort, welcher dem Ort zugeordnet ist, welcher dem mnemonischen Wert der Suchkriterien zugeordnet ist, gefolgt von Ereignisaufzeichnungen in steigendem Abstand weg von dem Startort aufweist; und
eine Anzeige (14) zum Anzeigen der Ereignisaufzeichnungen in dem geographisch geordneten Format.

## Revendications

1. Procédé de gestion d'enregistrements d'incidents dans un terminal radio mobile (10), comprenant les étapes consistant à :
lors de l'occurrence de chaque incident, parmi une pluralité d'incidents intéressant le terminal radio mobile (10), produire un enregistrement d'incident associé à l'incident, l'enregistrement d'incident contenant des informations de position de type mnémonique qui sont indicatives d'une position du terminal radio mobile (10) au moment de l'incident ;
lancer une recherche sur les informations de position associées à chaque enregistrement d'incident en utilisant des critères de recherche comprenant une valeur mnémonique liée à la position ;
agencer les enregistrements d'incidents répondant aux critères de recherche pour les présenter à un utilisateur dans un format Geoline, de manière à ce que l'agencement comprenne une liste des enregistrements d'incidents en partant de la position associée à la valeur mnémonique liée à la position dans les critères de recherche, suivie des enregistrements d'incidents de distance croissante par rapport à la position de départ ; et
afficher les enregistrements d'incidents dans le format Geoline.

2. Procédé selon la revendication 1, dans lequel les critères de recherche incluent également une valeur d'heure ou une plage horaire.

3. Procédé selon l'une quelconque des revendications 1 et 2, comprenant en outre l'étape consistant à lancer une seconde recherche sur les informations de position associées à chaque enregistrement d'incident, la seconde recherche recherchant des enregistrements d'incidents ayant au moins une relation en termes d'heure, de contenu ou de type d'incident avec un enregistrement sélectionné parmi les enregistrements d'incidents identifiés dans la recherche à l'aide des critères de recherche incluant la valeur mnémonique liée à la position.

4. Procédé selon l'une quelconque des revendications 1 à 3, dans lequel les enregistrements d'incidents de distance croissante sont regroupés soit par un seuil de distance, soit par relation à des positions identifiables.

5. Procédé selon l'une quelconque des revendications 1 à 4, dans lequel l'étape d'affichage des enregistrements d'incidents comprend une présentation graphique des enregistrements d'incidents sur une carte.

6. Procédé selon l'une quelconque des revendications 1 à 5, dans lequel chaque enregistrement d'incident contient en outre une estimation d'une précision des informations de position de type mnémonique associées.

7. Procédé selon la revendication 6, dans lequel l'étape de recherche des informations de position associées à chaque enregistrement d'incident comprend le filtrage des enregistrements d'incidents en fonction de l'estimation de la précision des informations de position associées.

8. Procédé selon l'une quelconque des revendications 6 et 7, dans lequel l'étape d'affichage des enregistrements d'incidents comprend l'affichage d'informations de précision pour chaque enregistrement d'incident, sur la base de l'estimation de précision associée.

9. Procédé selon l'une quelconque des revendications 1 à 8, dans lequel les enregistrements d'incidents dans le format Geoline peuvent être parcourus par niveaux hiérarchisés d'enregistrements d'incidents.

10. Terminal radio mobile (10) comprenant :
une mémoire (18) destinée à stocker un enregistrement d'incident lors de l'occurrence de chaque incident parmi une pluralité d'incidents intéressant le terminal radio mobile (10) ;
un processeur (26) destiné à exécuter une logique qui, lorsqu'elle est exécutée :
lors de l'occurrence de chaque incident, associe des informations de position à l'enregistrement d'incident correspondant, les informations de position étant indicatives d'une position du terminal radio mobile (10) au moment de l'incident ;
lance une recherche sur les informations de position associées à chaque enregistrement d'incident sur la base de critères de recherche saisis par l'utilisateur, comprenant une valeur mnémonique liée à la position ; et
agence les enregistrements d'incidents répondant aux critères de recherche pour les présenter à un utilisateur dans un format Geoline, de manière à ce que l'agencement comprenne une liste des enregistrements d'incidents en partant de la position associée à la valeur mnémonique liée à la position dans les critères de recherche, suivie des enregistrements d'incidents de distance croissante par rapport à la position de départ ; et
un écran d'affichage (14), destiné à afficher les enregistrements d'incidents dans le format Geoline.
